# EUROPÄISCHE PATENTSCHRIFT

(11) **EP 2 470 054 B1**
(45) Veröffentlichungstag und Bekanntmachung des Hinweises auf die Patenterteilung: **04.12.2013**
(21) Anmeldenummer: 09782227.4
(22) Anmeldetag: 26.08.2009
(51) Int. Cl.: A47J 43/07

(54) **VORRICHTUNG UND VERFAHREN ZUM MISCHEN VON MISCHGUT**
DEVICE AND METHOD FOR MIXING MATERIAL TO BE MIXED
DISPOSITIF ET PROCÉDÉ DE MÉLANGE D'ENROBÉ

(43) Veröffentlichungstag der Anmeldung: 04.07.2012
(73) Patentinhaber: FrXsh AG, 6403 Küssnacht (CH)
(72) Erfinder: VILLIGER, Roland, CH-6300 Zug (CH)
(74) Vertreter: OK pat AG
(86) Internationale Anmeldenummer: PCT/EP2009/061011
(87) Internationale Veröffentlichungsnummer: WO 2011/026506

(56) Entgegenhaltungen:
- DE-C1- 3 225 591
- DE-U1-202006 014 236
- US-A- 4 741 482
- US-A1- 2006 102 018
- US-A1- 2008 221 739

## Beschreibung

### Gebiet der Erfindung

Gegenstand der Erfindung ist eine Vorrichtung und ein Verfahren zum Mischen von Mischgut. Insbesondere geht es um das Mischen von Lebensmitteln und im Bereich der Lebensmittel besonders um trinkbare Lebensmittel.

### Hintergrund der Erfindung, Stand der Technik

Es gibt viele Bereiche in denen es um das Mischen von Mischgut geht. Im Folgenden geht es primär um den Lebensmittelbereich, obwohl sich die Erfindung auch auf zahlreiche andere Bereiche anwenden lässt.

Im Lebensmittelsektor gibt es Mixer, Rührstäbe und andere Mittel, um im Privathaushalt und in professionellen Küchen bei Bedarf Lebensmittel und Zutaten miteinander mischen zu können. Als Beispiel ist das Zubereiten von Salatsaucen genannt. Hier werden häufig die flüssigen und festen Zutaten in einen Mischbehälter gegeben, der mit einem Deckel verschliessbar ist. Durch Schütteln werden die Bestandteile miteinander vermengt. Um das Durchmischen zu verbessern, gibt es Behälter, deren Deckel ein feststehende Gestänge aufweist, das ins Innere des Behälters ragt und die Durchmischung begünstigt. Es sind auch Mischbehälter bekannt, die ein Mischwerk umfassen, das in den Deckel integriert ist und das durch das Kurbeln eines Handknopfes auf der Deckeloberseite bewegbar ist. Solche Behälter haben typischerweise mindesten einen Ausguss, damit der Deckel nicht abgenommen werden muss.

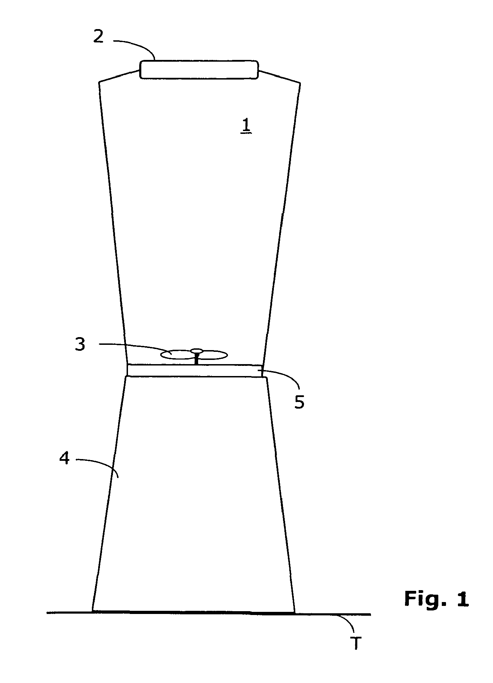

Es sind auch Küchengeräte bekannt, die einen Motor umfassen, um das Mischen oder Durchmengen zu automatisieren. Ein Beispiel eines typischen Küchenmixers ist in Fig. 1 gezeigt. Der Küchenmixer umfasst eine Antriebseinheit 4, die zum Beispiel auf einer Arbeitsfläche T abgestellt werden kann. Zum Mischen wird ein Spezialbehälter 1 aufgeschraubt, der im unteren Bereich ein Kappe 5 umfasst, die mehrere Aufgaben erfüllt. In diese Kappe 5 ist ein Rührwerk 3 integriert, das ins Innere des Spezialbehälters 3 ragt. Die Kappe 5 dichtet den Spezialbehälter 1 nach unten hin ab und die Kappe 5 dient als Schraubverbindung zu einem Anschlussbereich der Antriebseinheit 4. Die Kappe 5 ist typischerweise angeschweisst oder angeklebt, um Undichtigkeiten zu vermeiden. Zusätzlich zu der entsprechenden unteren Öffnung, die mit der Kappe 5 verschlossen ist, weist der Spezialbehälter 1 eine obenliegende Öffnung auf, die mit einem Deckel 2 spritzdicht verschliessbar ist.

Die Kappe, die das Rührwerk 3 aufnimmt, ist häufig aus mehreren Bauteilen zusammengesetzt, die aufwendig zu montieren und zu demontieren sind.

Das Dokument US 2008/102018 A1 betrifft einen Entsafter, bei dem ein "cup seat 4" auf ein Standgerät 3 mit innenliegendem Motor 8 aufgeschraubt wird. Ein flaschenförmiger Körper ("cup body 6" genannt) wird mit der Öffnung nach unten in den "cup seat 4" eingesetzt und dort festgeschraubt. Eine Antriebswelle 81 durchdringt das Gehäuse und den "cup seat 4", um an seinem oberen Ende ein Schneidwerk 5 aufzunehmen. Ein Verbindungsschaft wird beim Einschrauben des "cup body 6" in den "cup seat 4" betätigt, um so die Sicherheit des Geräts zu verbessern.

Das Dokument DE 20 2006 014236 U1 betrifft ein konventionelles Küchengerät, das mit einer magnetischen Sicherheitsverriegelung ausgestattet ist. Die Sicherheitsverriegelung ist einem Einschalter zugeordnet, um so die Bediensicherheit des Geräts zu verbessern.

Das Dokument US 2008/221739 A1 betrifft einen verbesserten Mixer. Der Mixer hat einen Standteil (base 12), der auf einem Untergrund steht und der einen innenliegenden Motor 14 umschliesst. Von oben her kann ein (Glas-)Gefäss 18 auf das Standteil aufgesetzt werden. Im Aufnahmebereich des Standteils ist ein Gefässsensor 16 angeordnet, um die Anwesenheit des Gefässes 18 zu detektieren. Das Gefäss 18 hat eine geschlossene Unterseite 18a und vorzugsweise eine gegenüberliegende offen Oberseite 18b. Im Bereich der geschlossenen Unterseite 18a sind vier Pfosten oder Füssen am Gefäss 18 vorgesehen, die genau in komplementäre Aufnahmen des Standteils passen, um so als Verdrehsicherung zu dienen. Eine Motorwelle 24 wird vom Motor 14 angetrieben. An der geschlossenen Unterseite 18a des Gefässes 18 ist ein Kupplungsstück 32 vorgesehen, in das ein Ende 24a der Motorwelle 24 formschlüssig eingreift. Ein Rührwerk 30 sitzt im Inneren des Gefässes 18 und wird über die Welle 24 und das Kupplungsstück 32 angetrieben.

Das Dokument US 4741482 A betrifft ein Gerät, das mit einem magnetischen Sicherheitsschalter ausgestattet ist. Nur wenn ein Gefäss des Geräts sich in der richtigen Position befindet, kann der Motor das Gerät mit Strom versorgen.

Das Dokument DE 32 25 591 C1 betrifft ein Zerkleinerungsgerät, das einen Behälter umfasst, der mit einem aufschraubbaren Deckel verschliessbar ist. Am Deckel sind ein Kupplungsstück und im Inneren ein Messer drehbar gelagert, um durch Aufstecken den Behälter samt Deckel mit einem Handmixgerät samt Motor verbinden zu können. Es kommt hier einen formschlüssige Verbindung zum Einsatz. Es kommt auch ein Federmechanismus zum Einsatz, um nur bei aufgestecktem Deckel mit Behälter das Handmixgerät einschalten zu können. Der Federmechanismus wird zusammen gedrückt, wenn ein rohrförmiger Fortsatz des Deckels eingreift.

Es ist ein Nachteil der vorbekannten Lösungen, das häufig der Reinigungsaufwand sehr gross ist. Ausserdem erfordern einige der genannten Lösungen eine Reihe von Spezialteilen oder Gerätschaften. Speziell im Lebensmittelbereich spielen aber Aspekte wie Handhabbarkeit, Variabilität und Flexibillät eine grosse Rolle. Ausserdem ist es wichtig, dass derartige Gerätschaften möglichst einfach und vollständig demoniertbar sein sollten, um den höchsten hygenischen Ansprüchen zu genügen. Es ist ein weiteres Problem derartiger Gerätschaften, dass sie besonders in Küchen oder öffentlichen Bereichen von mehreren Anwendern benutzt werden. Dabei können Zutaten auf unerwünschte Weise miteinander vermengt werden, wenn zum Beispiel der Spezialbehälter 1 samt integriertem Rührwerk 3 nicht ausreichend gereinigt wurde.

Es stellt sich daher die Aufgabe einen einfacheren Ansatz zum Mischen, Durchmengen, Rühren und sogar zum Zerkleinern oder Zerhacken von Zutaten oder anderem Mischgut bereitzustellen. Die entsprechenden Mittel sollen möglichst universell einsetzbar sein und es soll trotzdem für jeden Benutzer eine ausreichende Hygiene gewährleistet werden können.

Gemäss Erfindung kommt ein komplett neuer Ansatz zum Einsatz, der darauf beruht, dass eine Vorrichtung mit einem Behälter, zum Beispiel eine Trinkflasche, verwendet wird, der nur eine einzige Öffnung besitzt. Diese Öffnung ist mit einem Deckel dicht verschliessbar. Es ist ein Rührwerk vorgesehen, das fest in den Deckel integriert ist, so dass nach dem Verschliessen der Öffnung mit dem Deckel das Rührwerk in das Innere des Behälters ragt. Weiterhin umfasst die Vorrichtung eine Antriebsvorrichtung mit einem Verbindungsbereich, der so ausgelegt ist, dass der Behälter zusammen mit dem Deckel im Verbindungsbereich an- oder aufsetzbar ist. Beim An- oder Aufsetzen des Behälters wird das Rührwerk antriebstechnisch (vorzugsweise kraftschlüssig) mit der Antriebsvorrichtung verbunden. Wenn nun die Antriebsvorrichtung aktiviert wird, versetzt diese das Rührwerk durch den Deckel hindurch in Rotation. Die Rotation des Rührwerks bewirkt das Mischen oder Durchmengen von Mischgut, das sich im Inneren des Behälters befindet.

Die erfindungsgemässe Vorrichtung ermöglicht eine ganze Reihe von neuen Anwendungen, die besonders im Ernährungsbereich Bedeutung gewinnen werden.

Die erfindungsgemässe Vorrichtung ist flexibel einsetzbar und lässt sich problemlos reinigen. Besonders vorteilhaft ist die Tatsache, dass die Anzahl der Bestandteile auf drei Grundelemente reduziert werden konnte. Insgesamt umfasst die Vorrichtung nämlich nur den Deckel mit fest integriertem Rührwerk, den Behälter, zum Beispiel in Form einer Trinkflasche, und die Antriebsvorrichtung.

Bei dieser Lösung entfallen das übliche Abwaschen von vielen einzelnen und zum Teil nur schwer zugänglichen Geräteteilen. Ausserdem erübrigt sich das Umleeren von Mixgut für die Lagerung oder Weiterverarbeitung, weil das Mixgut insitu, d.h. direkt im Behälter, bereitgestellt wird. Das Mixgut kann absolut hygenisch hergestellt, gelagert und transportiert werden. Je nach Ausgestaltung hat auch kein Dritter Zugang zu dem Mixgut, was vor allem im Bereich des Hochleistungssports und im Profisportbereich von Bedeutung sein kann.

Die erfindungsgemässe Vorrichtung eignet sich besonders als Getränkemixer.

Die erfindungsgemässe Vorrichtung als Küchen- und Gastroanwendung zum Beispiel bei der Herstellung von Suppen, Saucen, Getränken, Shakes, Softdrinks, usw. eingesetzt werden.

Im Sportbereich kann die erfindungsgemässe Vorrichtung zum Bereitstellen von Fitnessdrinks, -cocktails, Fruchtsäften, Kraftnahrung usw. eingesetzt werden.

Die Erfindung eignet sich aber auch zum Bereitstellen von Babynahrung und zum Bereitstellen von verflüssigter Nahrung im Spitalbereich, in Seniorenheimen und dergleichen.

Durch die einfache Handhabung und aufgrund der Tatsache, dass es nur drei Grundelemente gibt, ergeben sich neue und innovative Möglichkeiten für die Verpflegung.

Die Erfindung lässt sich aber auch in anderen Bereiche anwenden wo es um das schnelle und problemlose Mischen von Bestandteilen geht. Besonders hervorzuheben ist hier das Mischen von Mehrkomponentenstoffen, wie Kleb- oder Farbstoffen, und das Anrühren von Medikamenten oder Nahrungsergänzungsmitteln.

### ZEICHNUNGEN

Weitere Einzelheiten und Vorteile der Erfindung werden im Folgenden anhand von Ausführungsbeispielen und mit Bezug auf die Zeichnung beschrieben. Es zeigen:
- **FIG. 1**: eine schematische Seitenansicht eines bekannten Küchenmixers (Stand der Technik);
- **FIG. 2A - 2H**: eine Sequenz von schematisierten Abbildungen, die eine mögliche Anwendung einer erfindungsgemässen Vorrichtung aufzeigen;
- **FIG. 3A**: eine schematische Schnittansicht einer Vorrichtung gemäss Erfindung in einer ersten Ausführungsform;
- **FIG. 3B**: eine schematische Schnittansicht einer Vorrichtung gemäss Erfindung in einer zweiten Ausführungsform;
- **FIG. 3C**: eine schematische Schnittansicht einer Vorrichtung gemäss Erfindung in einer dritten Ausführungsform;
- **FIG. 4A**: eine schematische Schnittansicht einer Vorrichtung gemäss Erfindung in einer weiteren Ausführungsform mit geöffnetem Schalter;
- **FIG. 4B**: eine schematische Schnittansicht der Vorrichtung nach Fig. 4A mit geschlossenem Schalter;
- **FIG. 5A**: eine schematische Schnittansicht einer Vorrichtung gemäss Erfindung in einer weiteren Ausführungsform mit geöffnetem Schalter;
- **FIG. 5B**: eine schematische Schnittansicht der Vorrichtung nach Fig. 5A mit geschlossenem Schalter;
- **FIG. 6A**: eine schematische Draufsicht eines Deckels einer Vorrichtung gemäss Erfindung;
- **FIG. 6B**: eine schematische Schnittansicht des Deckels nach Fig. 6A;
- **FIG. 7**: eine schematische Schnittansicht einer Vorrichtung gemäss Erfindung in einer besonders bevorzugten Ausführungsform mit Sicherheitsschalter.

### DETAILLIERTE BESCHREIBUNG

Im Folgenden wird die Erfindung in Ausführungsformen beschrieben, die speziell für den Lebensmittelbereich zugeschnitten sind. Die Erfindung lässt sich ohne weiteres auf andere Begriffssysteme und/oder Fachgebiete übertragen. In anderen Fachgebieten sind die Begriffe sinngemäss anzuwenden.

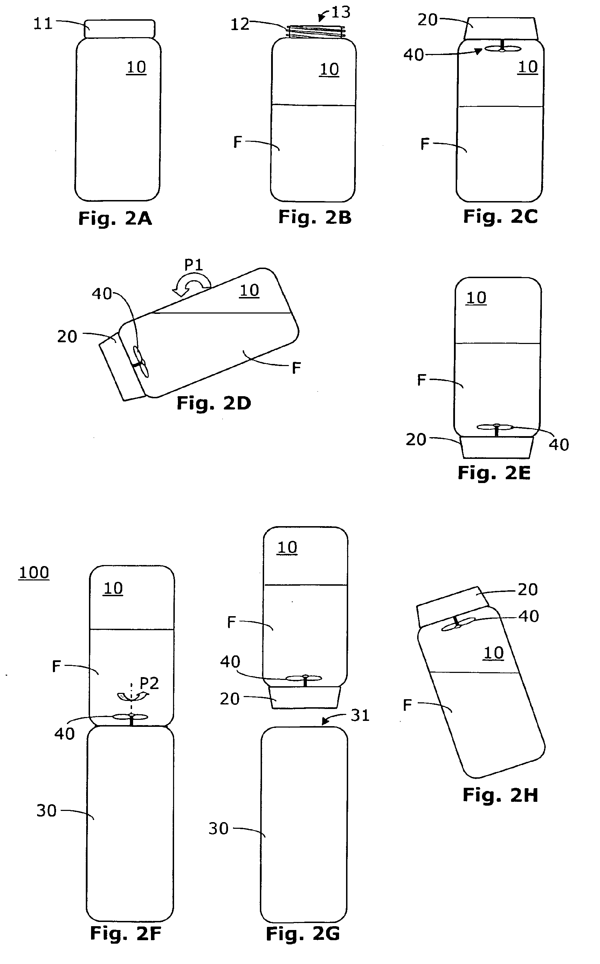

In den Figuren 2A bis 2H ist eine Abfolge von Einzelschritten gezeigt. Anhand dieser Einzelschritte sollen die grundlegenden Elemente der Erfindung beschrieben werden.

Fig. 2A zeigt einen Behälter 10, hier in Form einer Trinkflasche, mit einem Deckel 11.

Der Begriff Behälter 10 wird hier verwendet, um folgende Behälter zu umschreiben:
- Flaschen,
- Kannen,
- Dosen,
- Krüge,
- Tassen,
- Becher, usw.

Diese Behälter 10 können zum Beispiel aus Glas, Kunststoff, vorzugsweise Polycarbonat (PC), Polyethylen (PE), hochdichtem Polyethylen (HDPE) oder Polypropylen (PP), Aluminium, Keramik gefertigt sein.

Der Deckel 11 wird abgenommen, zum Beispiel durch Abschrauben. In Fig. 2B ist der Behälter 10 entsprechend ohne Deckel 11 gezeigt. Der Behälter 10 weist im oberen Bereich eine Öffnung 13 auf. Im Bereich dieser Öffnung 13 ist hier ein Aussengewinde, vorzugsweise ein standardisiertes Aussengewinde 12, vorgesehen. Es sind aber auch andere lösbare Verbindungen zwischen Deckel 11 und Behälter 10 möglich, die ein dichtes Verschliessen des Behälters 10 mit dem Deckel 11 ermöglichen.

Durch die Öffnung 13 hindurch kann der Behälter mit Mischgut F befüllt werden. In Fig. 2B ist ein Zustand gezeigt, bei dem ca. 2/3 des Behälters 10 gefüllt sind.

Der Begriff Mischgut F wird hier unter anderem verwendet, um
- flüssiges und zähflüssiges Mischgut mit einem oder mehreren Bestandteilen,
- Mischungen oder Kombinationen von verschiedenem Mischgut mit einem oder mehreren Bestandteilen,
- Mischungen oder Kombinationen von flüssigem und zähflüssigem Mischgut mit festen Bestandteilen
zu umschreiben.

Im Folgenden sind einige Mischgutbeispiele aus dem Lebensmittelbereich genannt:
- Flüssigkeit (z.B. Wasser) mit Geschmackzusätzen (z.B. Sirup);
- Milchprodukt mit Frucht- (z.B. Himbeeren) oder Gemüsezusätzen (Gurken);
- Mixgetränke aus alkoholischen und nicht-alkoholischen Anteilen;
- Heiss- oder Kaltgetränke aus einer Flüssigkeit zusammen mit lösbarem Pulver oder Granulat (z.B. Instantkaffee oder Suppenpulver);

Es kann aber auch Mischgut aus dem Non-Foodbereich verwendet werden.

Diese Öffnung 13 wird nun in einem weiteren Schritt, siehe Fig. 2C, durch einen erfindungsgemässen Spezialdeckel 20 verschlossen. Dieser Deckel 20 umfasst ein sogenanntes Rührwerk 40, das hier rein schematisch dargestellt ist. Das Rührwerk 40 ist so fest in den Deckel 20 integriert, dass insgesamt der Behälter 10 dicht abgeschlossen ist. Dieser Punkt ist wichtig, da sonst beim Umdrehen des mit Mischgut F befüllten Behälters 10, wie in Fig. 2D angedeutet, Mischgut F austreten würde.

In Fig. 2D ist angedeutet, dass der Behälter 10 nun durch eine Drehbewegung P1 auf den "Kopf" gestellt wird. D.h., der Behälter 10 wird so gedreht, dass er mit dem Deckel 20 nach unten weist. Diese Zwischenposition ist in Fig. 2E dargestellt.

Nun wird der Behälter 10 in dieser Position mit der Antriebsvorrichtung 30 verbunden. Dies geschieht durch ein einfaches manuelles Aufstecken und Andrücken des Behälters 10 gegen einen obenliegenden Verbindungsbereich 31 der Antriebsvorrichtung 30. In Fig. 2F ist eine Momentaufnahme gezeigt, bei der der Behälter 10 mit der Antriebsvorrichtung 30 verbunden ist.

Beim Verbinden des Behälters 10 mit der Antriebsvorrichtung 30, taucht der Deckel 20 ganz oder teilweise in den Verbindungsbereich 31 ein. Gleichzeitig wird das Rührwerk 40 antriebstechnisch mit der Antriebsvorrichtung 30 verbunden. Diese antriebtechnische Verbindung sorgt für eine mechanische Kopplung zwischen einem Antrieb, der sich an oder in der Antriebsvorrichtung 30 befindet, und dem Rührwerk 40.

Wenn nun der Antrieb betätigt oder ausgelöst wird, so wird eine Rotationsbewegung um eine Vertikalachse des Antriebs erzeugt. Diese Rotationsbewegung wird mechanisch übertragen auf eine Vertikalachse R1 des Rührwerks 40 und das Rührwerk 40 beginnt sich zu drehen. In Fig. 2F ist die Drehbewegung des Rührwerks 40 durch den Pfeil P2 dargestellt.

Durch die Drehbewegung P2 des Rührwerks 40 kommt es zu einer Interaktion des Rührwerks 40 mit dem Mischgut F. Nachdem ein gewünschtes Ergebnis erzielt wurde, kann der Behälter 10 abgenommen werden. Beim Abnehmen wird die antriebstechnische Verbindung unterbrochen. Dieser Moment ist in Fig. 2G gezeigt. Nun kann der Behälter 10 umgekehrt werden, wie in Fig. 2H gezeigt.

Das Mischgut F kann nun nach dem Entfernen des Spezialdeckels 20 z.B. getrunken werden oder es kann ein anderer Deckel (z.B. der ursprüngliche Deckel 11) aufgesetzt werden.

Durch die genannten Schritte kann man zum Beispiel mit nur wenigen Handhabungen ein Milchshake wie folgt herstellen:
a. Befüllen des Behälters 10 durch die Öffnung 13 hindurch mit Mischgut F aus Milch und Himbeeren (Fig. 2B),
b. Verschliessen der Öffnung 13 mit dem Deckel 20 (Fig. 2C),
c. Drehen des Behälters 10 samt Deckel 20 (Fig. 2D und 2E),
d. Aufsetzen des Behälters 10 samt Deckel 20 in den Verbindungsbereich 31 der Antriebsvorrichtung 30 (Fig. 2F),
e. Auslösen der Antriebsvorrichtung 30, um eine Rotationsbewegung um eine Antriebsachse (Vertikalachse) zu erzeugen (Fig. 2F),
f. kraftschlüssiges Übertragen der Rotationsbewegung der Antriebsachse auf eine Achse R1 des Rührwerks 40 (Fig. 2F),
g. Durchmischen des Mischguts F durch die Rotation des Rührwerks 40 (Fig. 2F),
h. Trennen des Behälters 10 samt Deckel 20 von der Antriebsvorrichtung 30 (Fig. 2G),
i. Öffnen des Deckels 20, um Zugang zu dem Mischgut F in Inneren des Behälters 10 zu erhalten.

Dieser Vorgang dauert nur wenige Sekunden und es wird wenig Geschirr verschmutzt, das anschliessend gereinigt werden müsste.

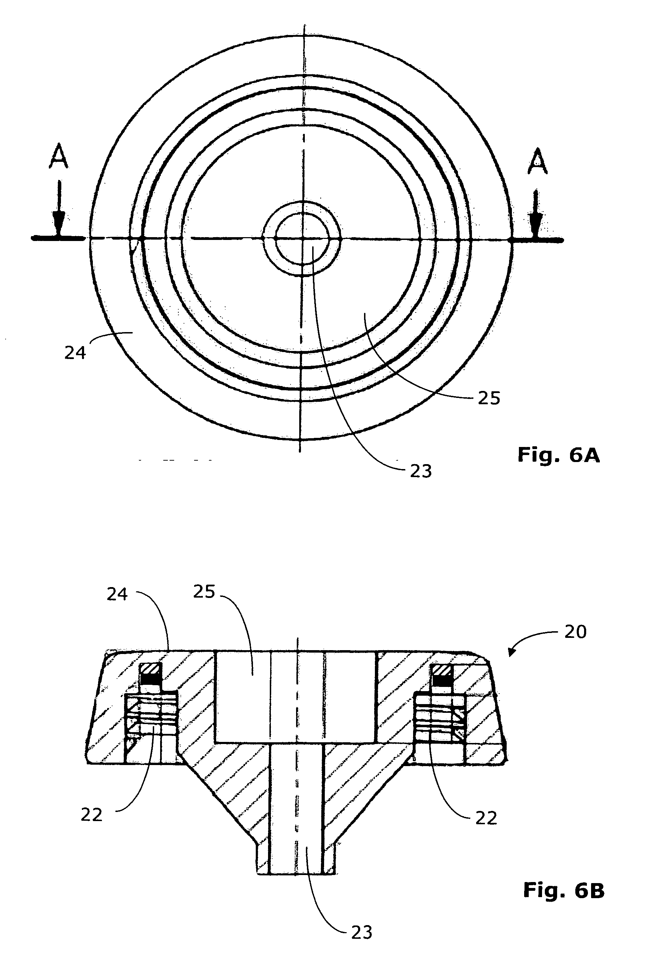

In einer besonders bevorzugten Ausführungsform weist der Behälter 10 im Bereich der Öffnung 13 ein (Aussen-)Gewinde 12 auf, wie in Fig. 2B angedeutet. Der Deckel 20 weist dann ein entsprechend komplementäres (Innen-) Gewinde 22 auf, wie in Fig. 6B gezeigt.

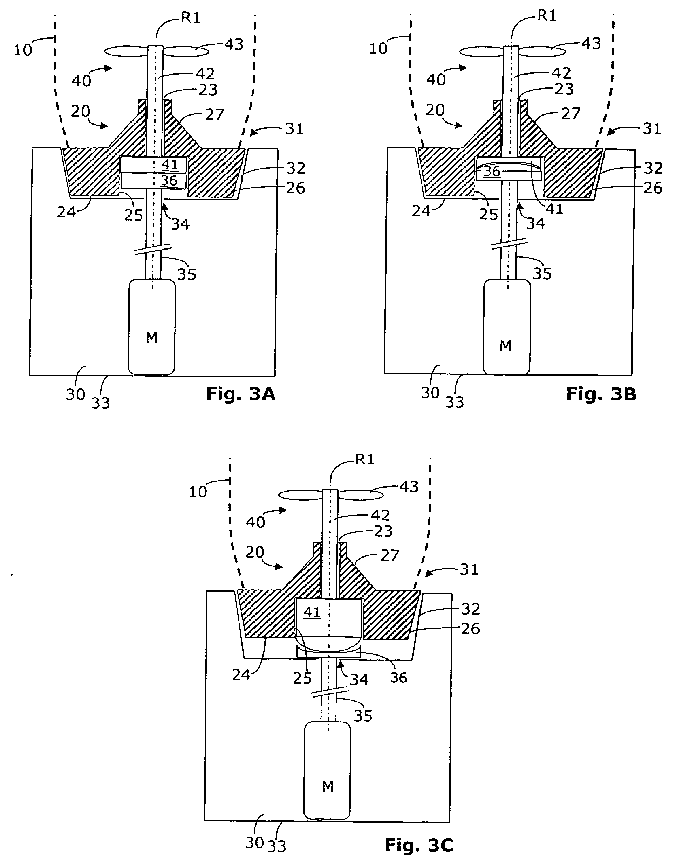

Die Deckel 20 gemäss Erfindung zeichnen sich dadurch aus, dass sie einen Achsdurchtritt 23 aufweisen, der es ermöglicht das Rührwerk 40, das bei geschlossenem Deckel 20 im Inneren des Behälters 10 sitzt, von ausserhalb des Behälters 10 anzutreiben. Details verschiedener solcher Deckel 20 sind in den Figuren 3A, 3B, 3C, 6A, 6B und 7 gezeigt. Auf der Deckeloberseite 24 ist eine rotationssymmetrische Vertiefung 25 vorgesehen. Der Achsdurchtritt 23 mündet in diese Vertiefung 25. Beim gebrauchsfertig montierten Deckel 20 (d.h. sobald das Rührwerk 40 bei der Produktion/Montage fest integriert ist) sitzt in der Vertiefung 25 ein tellerförmiger Mitnehmer 41, der antriebstechnisch mit einem antriebsseitigen Gegenstück 36 in Wechselwirkung tritt.

Das Gewinde 12 des Behälters und das Gewinde 22 des Deckels 20 sind so ausgeführt, dass durch ein Aufschrauben des Deckels 20 die Öffnung 13 dicht verschliessbar ist.

Vorzugsweise nutzt die Erfindung ein standardisiertes Gewinde 12, 22, damit kommerzielle Produkte anderer Anbieter für die Zwecke der Erfindung eingesetzt werden können. Damit können zum Beispiel Sport- und Freizeitflaschen durch ein einfaches Aufsetzen des Deckels 20 zum Mischen eingesetzt werden.

Anhand der Figuren 3A bis 3C sind drei verschiedene Ausführungsform der antriebstechnischen Verbindung zwischen einem Antrieb, hier in Form eines Motors M, und dem Rührwerk 40 gezeigt. Es handelt sich um schematisierte Schnittansichten, die jeweils einen Deckel 20, das Rührwerk 40 und Teile einer Antriebsvorrichtung 30 erkennen lassen.

In Fig. 3A ist eine Ausführungsform gezeigt, bei der das Rührwerk 40 eine Rührwerkachse 42 und einen Rührkörper 43 aufweist. Die Rührwerkachse 42 erstreckt sich durch einen Achsdurchtritt 23 hindurch. Auf der Aussenseite des Deckels 20 ist eine rotationssymmetrische Vertiefung 25 vorgesehen. In dieser Vertiefung 25 sitzt ein tellerförmiger Mitnehmer 41, der mit der Rührwerkachse 42 verbunden ist.

Der Deckel 20 wird mit seiner Deckeloberseite 24 voran in eine Ausnehmung 32 an der Oberseite der Antriebsvorrichtung 30 gesteckt. Die Ausnehmung 32 ist Teil des obenliegenden Verbindungsbereichs 31 der Antriebsvorrichtung 30. Die Ausnehmung 32 hat eine konische Seitenwand. Die Neigung der konischen Seitenwand entspricht in etwa der Neigung der konischen Aussenwand 26 des Deckels 20.

Im Gehäuse 33 der Antriebsvorrichtung 30 ist eine Achsöffnung 34 vorgesehen durch die hindurch eine von dem Antrieb M angetriebene Vertikalachse 35 verläuft. Am Ende der Vertikalachse 35 sitzt ein antriebsseitiges Gegenstück 36, das mit dem tellerförmigen Mitnehmer 41 kraftschlüssig in Wechselwirkung tritt, wenn der Behälter 10 samt Deckel 20 aufgesetzt oder aufgesteckt wird.

In Fig. 3B ist eine ähnliche Ausführungsform gezeigt, deren Elemente im Wesentlichen übereinstimmen mit den Elementen der Fig. 3A. Der tellerförmige Mitnehmer 41 hat hier jedoch eine leicht konkave Oberfläche. Das antriebsseitige Gegenstück 36 weist eine komplementäre Fläche auf, die konvex geformt ist. Der tellerförmige Mitnehmer 41 und das Gegenstück 36 greifen ineinander. Auch hier entsteht eine kraftschlüssige Wechselwirkung. Besonders bevorzugt ist eine Ausführungsform, bei der die konkave Oberfläche des Mitnehmers 41 gummielastisch ausgeführt ist, ähnlich wie bei einem Saugnapf.

Die Ausführungsformen der Figuren 3A und 3B zeichnen sich dadurch aus, dass der Behälter 10 samt Deckel 20 auf dem Kopf abgestellt werden kann, da der Deckel 20 eine gerade Oberseite 24 hat. Der tellerförmige Mitnehmer 41 ragt nicht über die Oberfläche 24 hinaus.

In Fig. 3C ist eine ähnliche Ausführungsform gezeigt, deren Elemente im Wesentlichen übereinstimmen mit den Elementen der Fig. 3A und Fig. 3B. Der tellerförmige Mitnehmer 41 hat hier jedoch eine konvexe Oberfläche. Das antriebsseitige Gegenstück 36 weist eine komplementäre Fläche auf, die konkav geformt ist. Der tellerförmige Mitnehmer 41 und das Gegenstück 36 greifen ineinander. Auch hier entsteht eine kraftschlüssige Wechselwirkung. Besonders bevorzugt ist eine Ausführungsform, bei der die konkave Oberfläche des Gegenstücks 36 gummielastisch ausgeführt ist, ähnlich wie bei einem Saugnapf.

Ein Deckel nach Fig. 3C eignet sich besonders für den Fall, dass eine Dauerdichtigkeit nicht zu 100% gewährleistet werden kann. Da der Deckel 20 aufgrund des konvexen (bauchigen) Mitnehmers 41 nicht glatt ist, kann der Behälter 10 samt Deckel 20 nicht auf kopfüber abgestellt werden.

In den Figuren 3A bis 3C sind weitere optionale Details zu erkennen. So hat der Deckel 20 einen konischen Fortsatz 27, der sich ins Innere des Behälters 10 erstreckt. Durch diesen Fortsatz 27 sitzt das Rührwerk 40 weiter im Inneren des Behälters 10. Die geneigte Seitenfläche des konischen Fortsatzes 27 erleichtert das Reinigen des Deckels 20 und die Rührwerkachse 42 kann besser gegenüber dem Deckel 20 abgedichtet werden.

Das Rührwerk 40 kann eines oder mehrere Rührblätter 43 (wie in den Figuren 3A bis 3C angedeutet), einen oder mehrere Rührarme, eine oder mehrere Schneiden umfassen. Es ist auch eine Kombination dieser Elemente möglich.

Für gewisse Anwendungsgebiete kann der Deckel 20 samt Rührwerk als Wegwerfartikel ausgeführt sein. So können zum Beispiel im Bau- und Hobbybereich Farben oder anderes Mehrkomponenten-Mischgut gemischt und gebraucht werden.

Die Antriebsvorrichtung 30 kann entweder mit einem eigenen Antrieb M, zum Beispiel in Form eines Motors, ausgestattet sein, oder die Antriebsvorrichtung 30 kann an den Antrieb eines anderen Geräts angekoppelt werden. Besonders vorteilhaft ist hier eine Anbindung an ein Küchengerät oder an eine Kaffeemaschine mit Mahlwerk. In diesem Fall kann das Gerät oder die Maschine einen Verbindungsbereich, analog zu dem Verbindungsbereich 31, aufweisen. Bei Bedarf wird der Behälter 10 samt Deckel 20 am Verbindungsbereich angesetzt, um über einen Motor des Geräts oder der Maschine das Rührwerk 40 zu betätigen.

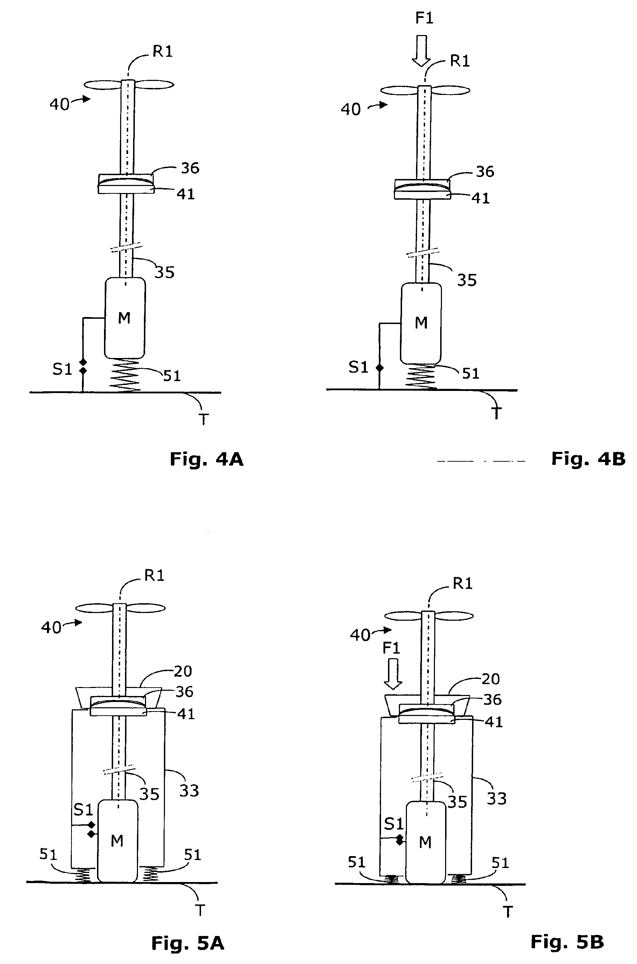

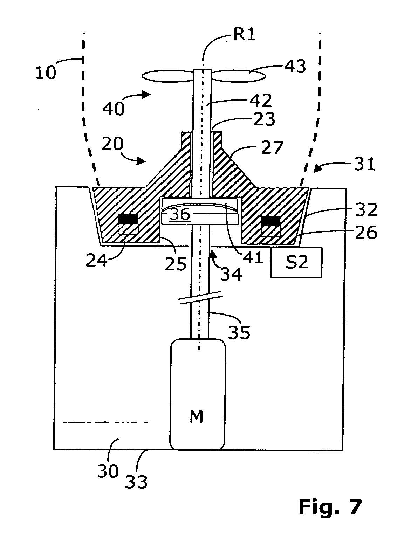

Um die Gefahr des Missbrauchs oder die Verletzungsgefahr zu reduzieren, werden spezielle Massnahmen vorgeschlagen. In den Figuren 4A, 4B, 5A, 5B und in Fig. 7 sind hierzu Beispiele gezeigt, die sich auch kombinieren lassen.

Der Antrieb der Vorrichtung 100 soll möglichst nicht durch einen separaten Schalter betätigt werden, sondern es soll der Motor M beim Aufsetzen des Behälters 10 mit Deckel 20 automatisch angeschaltet werden.

In den Figuren 4A und 4B ist dazu ein erstes Beispiel gezeigt. Der Einfachheit halber sind nur einige grundlegende Elemente dargestellt. Der Motor M ist hier auf einer Feder 51 oder einem federelestischen Element gelagert. Ein Schalter S1 (auch Druckschalter genannt) ist so angeordnet, dass nur beim Aufbringen eines Drucks F1 der Schalter geschlossen und die Stromversorgung des Motors M etabliert werden. In Fig. 4B ist angedeutet, dass durch den Druck F1, der über den Behälter 10 und den Deckel 20 auf die Achse 35 wirkt, der Motor M in Richtung Arbeitsfläche T gedrückt wird. Hierbei wird die Feder 51 zusammengestaucht und der Schalter S1 wird mechanisch geschlossen.

In den Figuren 5A und 5B ist dazu ein zweites Beispiel gezeigt. Der Einfachheit halber sind auch nur einige grundlegende Elemente dargestellt. Der Motor M steht hier fest auf einer Arbeitsfläche T. Das Gehäuse 33 ist aber auf Federn 51 oder auf federelestischen Elementen gelagert. Ein Schalter S1 ist so angeordnet, dass nur beim Aufbringen eines Drucks F1 der Schalter geschlossen und die Stromversorgung des Motors M etabliert werden. In Fig. 5B ist angedeutet, dass durch den Druck F1, der über den Behälter 10 und den Deckel 20 auf das Gehäuse 33 wirkt, das Gehäuse 33 in Richtung Arbeitsfläche T gedrückt wird. Hierbei werden die Federn 51 zusammengestaucht und der Schalter S1 wird mechanisch geschlossen.

Die beiden Ausführungsformen der Figuren 4A, 4B, 5A und 5B haben sich als sicher und zuverlässig erwiesen. Es ist aber denkbar, dass ein Benutzer den Deckel 20 samt Rührwerk 40 auf den Verbindungsberreich 31 aufsetzt und Druck F1 ausübt. In diesem Fall kann es zu Verletzungen kommen, da der Antrieb M das Rührwerk 40 antreibt sobald der Schalter S1 geschlossen ist. Vorzugsweise kommt daher eine kraftschlüssige Verbindung zwischen den Elementen 41 und 36 zum Einsatz, die verhindern, dass ein zu grosses Drehmoment auf das Rührwerk 40 einwirkt. Beim Blockieren des Rührwerks 40 mit den Fingern wirkt die kraftschlüssige Verbindung als Rutschkupplung, um ernstere Verletzungen zu vermeiden.

Noch mehr Sicherheit bietet jedoch eine Ausführungsform, die im Folgenden anhand der Figuren 6A, 6B und 7 beschrieben wird. Im Deckel 20 ist eine erstes Element eines Magnetschalters S2 vorgesehen. Das zweite Element des Magnetschalters S2 sitzt im Gehäuse 33 nahe am Verbindungsbereich 31 (siehe Fig. 7). In Schnitt in Fig. 6B ist zu erkennen, dass im Deckel 20 ein Metallring elastisch zum Beispiel auf einem elastischen Ring gelagert ist. Beim festen Aufschrauben des Deckels 20 auf den Behälter 10 drückt die Oberkante des Behälters 10 in eine ringförmige Nut des Deckels 20. Durch den Druck, der dadurch ausgeübt wird, wird der Metallring im Deckel 20 nach oben in Richtung Deckeloberseite 24 gedrückt und der elastische Ring wird zusammen gedrückt. Wenn nun der Behälter 10 mit fest aufgeschaubtem Deckel 20 in den Verbindungsbereich 31 gebracht wird, so sitzt der Metallring relativ nah an dem zweiten Element des Magnetschalters S2. Durch die unmittelbare räumliche Nähe der beiden Elemente kommt es zu einer Wechselwirkung, die den Magnetschalter S2 schliesst. Erst wenn dieser Magnetschalter S2 geschlossen ist kann der zweite Schalter S1 durch das Ausüben von Druck F1 den Motor M mit Strom versorgen.

Diese Anordnung bietet mehrere Sicherheitsaspekte. Einerseits kann die Vorrichtung 100 nicht mit einem falschen Deckel betrieben werden. Andererseits wird ein dichtes Verschliessen gewährleistet, da nur beim ausreichend festen Aufschrauben des Deckels 20 der Metallring ausreichend nah in Richtung der Deckeloberseite 24 gedrückt wird. Vor allem aber kann die Vorrichtung 100 nur dann betrieben werden, wenn der Deckel 20 einen Behälter 10 verschliesst. Der Deckel 20 alleine kann den Schaltmechanismus nicht auslösen, da der Abstand zwischen Metallring und Schalter S2 zu gross ist. Die elastische Lagerung mittels eines elastischen Rings stellt den metallischen Ring stets wieder in die Ausgangsposition zurück. Es ist ein Vorteil dieser Ausführungsform, dass es keinerlei baulicher Änderungen des Behälters 10 bedarf. Der Sicherheitsmechanismuss funktioniert bei jedem Behälter 10, der ein Standardgewinde 12 hat.

Vorzugsweise sind der Schalter S2 und der Schalter S1 in Reihe geschaltet, was bedeutet, dass der Motor M erst mit Strom versorgt wird, wenn beide Schalter geschlossen sind. D.h. nur wenn der richtige Deckel 20 mit eingebautem ersten Element aus Metallring 28 und elastischem Ring 29 zusammen mit einem geeigneten Behälter 10 verbunden ist und nur wenn diese Kombinatrion aus Deckel 20 und Behälter 10 im Verbindungsbereich richtig angesetzt werden und nur wenn Druck F1 aufgeübt wird, beginnt der Motor M zu drehen.

Besonders bevorzugt ist eine Antriebsvorrichtung 30, die statt einem reinen Druckschalter S1 einen sogenannten Regelschalter S3 umfasst. Dieser Regelschalter S3 ist so in die Antriebsvorrichtung 30 integriert, dass durch ein Drücken auf den Behälter 10 eine Druckkraft F1 auf die Antriebsvorrichtung 30 einwirkt. Diese Einwirkung bedient den Regelschalter S3, um den Motor M mit der Stromversorgung zu verbinden. Durch stärkeres Drücken wird die Druckkraft auf die Antriebsvorrichtung 30 erhöht und der Regelschalter S3 versorgt den Motor M so mit Strom, dass die Motordrehzahl zunimmt. Optional können der Regelschalter S3 und der Schalter S2 in Reihe geschaltet sein, wie oben beschrieben.

### Bezugszeichen

- Spezialbehälter: 1
- Deckel: 2
- Rührwerk: 3
- Antriebseinheit: 4
- Kappe: 5

- Behälter: 10
- Deckel: 11
- Aussengewinde: 12
- Öffnung: 13

- Spezialdeckel: 20

- komplementäres Gewinde: 22
- Achsdurchtritt,: 23
- Deckeloberseite: 24
- Vertiefung: 25
- konische Aussenwand: 26
- konischer Fortsatz: 27
- Antriebsvorrichtung: 30
- Verbindungsbereich: 31
- Ausnehmung: 32
- Gehäuse: 33
- Achsöffnung: 34
- Vertikalachse: 35
- Gegenstück: 36

- Rührwerk: 40
- tellerförmiger Mitnehmer: 41
- Rührwerkachse: 42
- Rührkörper / Rührblätter: 43

- Federlagerung: 51

- Mischgut: F
- Kraft: F1
- Motor: M
- Drehbewegung: P1, P2
- Vertikalachse: R1
- Schalter: S1
- Magnetschalter: S2
- Regelschalter: S3
- Tisch / Arbeitsfläche: T

## Patentansprüche

1. Vorrichtung (100) mit
- einem Behälter (10) mit einer Öffnung (13),
- einem Deckel (20) zum Verschliessen der Öffnung (13),
- einem Rührwerk (40), das durch den Deckel (20) hindurch in das Innere des Behälters (10) ragt,
- einer Antriebsvorrichtung (30) mit einem Antrieb (M) zum Antreiben des Rührwerks (40), wobei die Antriebsvorrichtung (30) einen Verbindungsbereich (31) aufweist, der so ausgelegt ist, dass
o der Behälter (10) zusammen mit dem Deckel (20) mit dem Verbindungsbereich (31) verbindbar ist,
○ dass bei dem Verbinden das Rührwerk (40) antriebstechnisch mit der Antriebsvorrichtung (30) koppelbar ist, und
○ dass das Rührwerk (40) und der Deckel (20) eine feste Baugruppe bilden,
- wobei das Rührwerk (40) eine Achse (42) umfasst, die sich durch den Deckel (20) hindurch erstreckt und
- das Rührwerk (40) einen Mitnehmer (41) umfasst, der beim Befestigen des Behälters (10) mit einem Gegenstück (36) der Antriebsvorrichtung (30) in Wechselwirkung tritt, und wobei
- im Deckel (20) ein erstes Element und im Verbindungsbereich (31) ein zweites Element (S2) angeordnet sind, die beim Aufsetzen des Behälters (10) samt Deckel (20) in Wechselwirkung treten und über das zweite Element (S2) eine Stromzufuhr des Antriebs (M) aktivieren,
**dadurch gekennzeichnet, dass**
es sich bei der Wechselwirkung um eine magnetische Wechselwirkung handelt, und wobei ein Metallelement als erstes Element und ein Magnetschalter (S2) oder-sensor als zweites Element dienen, und der Mitnehmer (41) beim Befestigen des Behälters (10) mit dem Gegenstück (36) der Antriebsvorrichtung (30) in kraftschlüssige Wechselwirkung tritt und das Metallelement so federelastisch im Inneren des Deckels (20) gelagert ist, dass eine Oberkante des Behälters (10) beim Aufschrauben des Deckels (20) auf den Behälter (10) das Metallelement in Richtung Deckeloberfläche (24) versetzt.

2. Vorrichtung (100) nach Anspruch 1, **dadurch gekennzeichnet, dass** der Behälter (10) im Bereich der Öffnung (13) ein Gewinde (12) aufweist und dass der Deckel (20) ein entsprechend komplementäres Gewinde (22) aufweist, wobei durch ein Aufschrauben des Deckels (20) die Öffnung (13) dicht verschliessbar ist.

3. Vorrichtung (100) nach einem der vorhergehenden Ansprüche, **dadurch gekennzeichnet, dass** das Rührwerk (40) eines oder mehrere der folgenden Elemente umfasst:
- ein Rührblatt (43), und/oder
- einen Rührarm, und/oder
- eine Schneide.

4. Vorrichtung (100) nach einem der vorhergehenden Ansprüche, **dadurch gekennzeichnet, dass** der Verbindungsbereich (31) so ausgelegt ist, dass beim Verbinden des Behälters (10) eine Umfangsfläche (26) des Deckels (20) mit einer Innenfläche (32) des Verbindungsbereich (31) in Wechselwirkung tritt.

5. Vorrichtung (100) nach Anspruch 4, **dadurch gekennzeichnet, dass** die Antriebsvorrichtung (30) einen Druckschalter (S1) umfasst, der so in die Antriebsvorrichtung (30) integriert ist, dass durch ein Drücken auf den Behälter (10) eine Druckkraft (F1) auf die Antriebsvorrichtung (30) einwirkt, welche den Druckschalter (S1) auslöst, um eine Stromzufuhr des Antriebs (M) aktivieren.

6. Vorrichtung (100) nach Anspruch 4, **dadurch gekennzeichnet, dass** die Antriebsvorrichtung (30) einen Regelschalter (S3) umfasst, der so in die Antriebsvorrichtung (30) integriert ist, dass
- durch ein Drücken auf den Behälter (10) eine Druckkraft (F1) auf die Antriebsvorrichtung (30) einwirkt, welche den Regelschalter (S3) auslöst, um so die Stromzufuhr des Antriebs (M) zu aktivieren,
- durch stärkeres Drücken die Druckkraft (F1) auf die Antriebsvorrichtung (30) erhöht wird und der Regelschalter (S3) den Motor (M) so mit Strom versorgt, dass die Motordrehzahl zunimmt.

7. Vorrichtung (100) nach einem der vorhergehenden Ansprüche, **dadurch gekennzeichnet, dass**
- der Behälter (10) aus lebensmittelverträglichen Materialien gefertigt ist,
- die Vorrichtung (100) einen Trinkdeckel (11) umfasst, der mit dem Behälter (10) verbindbar ist, nachdem der Deckel (20) entfernt wurde.

8. Vorrichtung (100) nach Anspruch 7, **dadurch gekennzeichnet, dass** der Behälter (10) speziell zur Aufnahme von Getränken, Suppen oder anderen flüssigen bis zähflüssigen Lebensmitteln ausgelegt ist.

9. Verfahren zum Zubereiten einer Mischung unter Einsatz einer Vorrichtung (100) mit
- einem Behälter (10) mit einer Öffnung (13),
- einem Deckel (20) zum Verschliessen der Öffnung (13),
- einem Rührwerk (40), das fest in den Deckel (20) integriert ist, so dass nach dem Verschliessen der Öffnung (13) mit dem Deckel (20) das Rührwerk (40) in das Innere des Behälters (10) ragt,
- einer Antriebsvorrichtung (30) zum Antreiben des Rührwerks (40),
wobei die folgenden Schritte ausgeführt werden:
a. Befüllen des Behälters (13) durch die Öffnung (13) hindurch mit Mischgut (F),
b. Verschliessen der Öffnung (13) mit dem Deckel (20),
c. Umdrehen des Behälters (10) samt Deckel (20),
d. Verbinden des Behälters (10) samt Deckel (20) mit einem Verbindungsbereich (31) der Antriebsvorrichtung (30),
e. Auslösen einer Wechselwirkung zwischen einem ersten Element, das in den Deckel (20) integriert ist, und einem zweiten Element (S2), das im Verbindungsbereich (31) der Antriebsvorrichtung (30) angeordnet ist, um eine Stromversorgung der Antriebsvorrichtung (30) freizugeben,
f. Auslösen der Antriebsvorrichtung (30), um eine Rotationsbewegung (P2) einer Antriebsachse (35) zu erzeugen,
g. Durchmischen des Mischguts (F) durch eine Rotation des Rührwerks (40),
h. Trennen des Behälters (10) samt Deckel (20) von der Antriebsvorrichtung (30),
i. Öffnen des Deckels (20), um Zugang zu dem Mischgut (F) in Inneren des Behälters (10) zu erhalten,
**dadurch gekennzeichnet, dass** es sich bei der Wechselwirkung um eine magnetische Wechselwirkung handelt, und wobei ein Metallelement als erstes Element und ein Magnetschalter (S2) oder -sensor als zweites Element dienen, das Metallelement so federelastisch im Inneren des Deckels (20) gelagert ist, dass eine Oberkante des Behälters (10) beim Aufschrauben des Deckels (20) auf den Behälter (10) das Metallelement in Richtung Deckeloberfläche (24) versetzt, und die Rotationsbewegung (P2) der Antriebsachse (35) kraftschlüssig auf eine Rührwerkachse (42) des Rührwerks (40) übertragen wird.

10. Verfahren nach Anspruch 9, **dadurch gekennzeichnet, dass** das Mischgut (F) mehrere Bestandteile und/oder Komponenten umfasst.

11. Verfahren nach Anspruch 9 oder 10, **dadurch gekennzeichnet, dass** das Auslösen der Antriebsvorrichtung (30) durch das Ausüben von manuellem Druck (F1) auf den Behälter (10) erfolgt, wobei dieser Druck (F1) auf die Antriebsvorrichtung (30) einwirkt und dort einen Druckschalter (S1) oder Regelschalter (S3) auslöst.

12. Verfahren nach Anspruch 9 oder 10, **dadurch gekennzeichnet, dass** nach dem Öffnen des Deckels (20) ein anderer Deckel (11), vorzugsweise ein Trinkdeckel, auf dem Behälter (10) befestigt wird.

13. Verfahren nach Anspruch 9 bis 12, **dadurch gekennzeichnet, dass** es eingesetzt wird, um Lebensmittel zuzubereiten.

## Claims

1. An apparatus (100), comprising
- a container (10) having an opening (13);
- a lid (20) for closing the opening (13);
- an agitator (40) which protrudes through the lid (20) into the interior of the container (10);
- a drive apparatus (30) with a drive (M) for driving the agitator (40), wherein the drive apparatus (30) comprises a connection area (31) which is arranged in such a way that
- the container (10) can be connected together with the lid (20) to the connection area (31);
- that during connection the agitator (40) can be coupled to the drive apparatus (30) in a driven manner, and
- that the agitator (40) and the lid (20) form a fixed assembly;
- wherein the container (40) comprises a shaft (42) which extends through the lid (20), and
- the agitator (40) comprises a driver (41) which comes into interaction with a counterpart (36) of the drive apparatus (30) during the fastening of the container (10), and wherein
- a first element is arranged in the lid (20) and a second element (S2) in the connection area (31), which enter into interaction upon placing on the container (10) plus lid (20) and activate a power supply of the drive (M) via the second element (S2),
**characterized in that**
the interaction concerns a magnetic interaction, and wherein a metal element is used as first element and an electromagnetic switch (S2) or sensor is used as second element, and the driver (41) enters into non-positive interaction with the counterpart (36) of the drive apparatus (30) during fastening of the container (10), and the metal element is mounted in a resilient manner in the interior of the lid (20) in such a way that an upper edge of the container (10) displaces the metal element in the direction of the lid surface (24) during the screwing of the lid (20) onto the container (10).

2. An apparatus (100) according to claim 1, **characterized in that** the container (10) comprises a thread (12) in the region of the opening (13), and the lid (20) comprises a respectively complementary thread (22), wherein the opening (13) can be tightly sealed by screwing on the lid (20).

3. An apparatus (100) according to one of the preceding claims, **characterized in that** the agitator (40) comprises one or several of the following elements:
- a stirring blade (43), and/or
- a stirring arm, and/or
- a cutter.

4. An apparatus (100) according to one of the preceding claims, **characterized in that** the connection area (31) is arranged in such a way that a circumferential area (26) of the lid (20) enters into interaction with an inside surface (32) of the connection area (31) during the connection of the container (10).

5. An apparatus (100) according to claim 4, **characterized in that** the drive apparatus (30) comprises a pressure switch (S1) which is integrated in the drive apparatus (30) in such a way that a pressure force (F1) acts upon the drive apparatus (30) by pressing on the container (10), said pressure force triggering the pressure switch (S1) in order to activate a power supply of the drive (M).

6. An apparatus (100) according to claim 4, **characterized in that** the drive apparatus (30) comprises a control switch (S3) which is integrated in the drive apparatus (30) in such a way that
- by pressure on the container (10) a pressure force (F1) acts on the drive apparatus (30) which triggers the control switch (S3) in order to thus activate the power supply of the drive (M);
- the pressure force (F1) on the drive apparatus (30) is increased by stronger pressing, and the control switch (S3) supplies the motor (M) with current in such a way that the motor speed increases.

7. An apparatus (100) according to one of the preceding claims, **characterized in that**
- the container (10) is made of food-compatible materials;
- the apparatus (100) comprises a drinking lid (11) which is connectable to the container (10) once the lid (20) has been removed.

8. An apparatus (100) according to claim 7, **characterized in that** the container (10) is especially arranged for accommodating beverages, soups or other liquid to viscous foodstuffs.

9. A method for the preparation of a mixture by using an apparatus (100), comprising
- a container (10) having an opening (13);
- a lid (20) for closing the opening (13);
- an agitator (40) which is rigidly integrated in the lid (20), so that after the closure of the opening (13) with the lid (20) the agitator (40) protrudes into the interior of the container (10);
- a drive apparatus (30) for driving the agitator (40),
wherein the following steps are performed:
a. filling of the container (13) through the opening (13) with mixing material (F);
b. closing of the opening (13) with the lid (20);
c. turning the container (10) plus the lid (20) around;
d. connecting the container (10) plus the lid (20) to a connection area (31) of the drive apparatus (30);
e. triggering an interaction between a first element which is integrated in the lid (20) and a second element (S2) which is arranged in the connection area (31) of the drive apparatus (30) in order to release a power supply of the drive apparatus (30);
f. triggering the drive apparatus (30) in order to produce a rotary movement (P2) of a drive shaft (35);
g. thorough mixing of the mixing material (F) by rotation of the agitator (40);
h. separating the container (10) plus lid (20) from the drive apparatus (30);
i. opening of the lid (20) in order to obtain access to the mixing material (F) in the interior of the container (10),
**characterized in that**
the interaction concerns a magnetic interaction, and wherein a metal element is used as first element and an electromagnetic switch (S2) or sensor is used as second element, and the metal element is mounted in a resilient manner in the interior of the lid (20) in such a way that an upper edge of the container (10) displaces the metal element in the direction of the lid surface (24) during the screwing of the lid (20) onto the container (10), and the rotational movement (P2) of the drive shaft (35) is transmitted in a non-positive way onto an agitator shaft (42) of the agitator (40).

10. A method according to claim 9, **characterized in that** the mixing material (F) comprises several ingredients and/or components.

11. A method according to claim 9 or 10, **characterized in that** the triggering of the drive apparatus (30) occurs by exerting manual pressure (F1) on the container (10), wherein said pressure (F1) acts upon the drive apparatus (30) and triggers a pressure switch (S1) or control switch (S3) there.

12. A method according to claim 9 or 10, **characterized in that** after the opening of the lid (20) another lid (11), preferably a drinking lid, is fixed to the container (10).

13. A method according to claim 9 to 12, **characterized in that** it is used to prepare food.

## Revendications

1. Dispositif (100) comprenant
- un récipient (10) avec une ouverture (13),
- un couvercle (20) pour fermer l'ouverture (13),
- un agitateur (40) qui fait saillie à l'intérieur du récipient (10) par le couvercle (20),
- un dispositif d'entraînement (30) avec un entraînement (M) pour entraîner l'agitateur (40), le dispositif d'entraînement (30) présentant une zone de raccordement (31) qui est conçue de sorte que :
o le récipient (10) avec le couvercle (20) puisse être raccordé à la zone de raccordement (31),
○ lors du raccordement, l'agitateur (40) puisse être couplé en entraînement avec le dispositif d'entraînement (30),
○ l'agitateur (40) et le couvercle (20) forment un ensemble fixe,
- l'agitateur (40) comprenant un axe (42) qui s'étend à travers le couvercle (20),
- l'agitateur (40) comprenant un tenon d'entraînement (41) qui, lorsque l'on fixe le récipient (10), entre en interaction avec une pièce complémentaire (36) du dispositif d'entraînement (30), et
- un premier élément étant agencé dans le couvercle (20) et un deuxième élément (S2) étant agencé dans la zone de raccordement (31), lesquels éléments, lorsque l'on pose le récipient (10) avec le couvercle (20) entrent en interaction et activent, via le deuxième élément (S2) une alimentation en courant de l'entraînement (M),
**caractérisé en ce que** l'interaction est une interaction magnétique, **en ce que** l'on utilise comme premier élément un élément métallique et comme deuxième élément un interrupteur magnétique (S2) ou un capteur magnétique, **en ce que** le tenon d'entraînement (41), lors de la fixation du récipient (10), entre en interaction par force avec la pièce complémentaire (36) du dispositif d'entraînement (30), et **en ce que** l'élément métallique est monté de façon élastique à l'intérieur du couvercle (20) de sorte qu'un bord supérieur du récipient (10), lorsque l'on visse le couvercle (20) sur le récipient (10), déplace l'élément métallique en direction de la surface du couvercle (24).

2. Dispositif (100) selon la revendication 1, **caractérisé en ce que** le récipient (10) présente dans la zone de l'ouverture (13) un filetage (12) et **en ce que** le couvercle (20) présente un filetage (22) complémentaire correspondant, l'ouverture (13) pouvant ainsi être fermée de façon hermétique par le vissage du couvercle (20).

3. Dispositif (100) selon l'une des revendications précédentes, **caractérisé en ce que** l'agitateur (40) comprend un ou plusieurs des éléments suivants :
- une pale de mélange (43), et/ou
- un bras agitateur, et/ou
- une lame.

4. Dispositif (100) selon l'une des revendications précédentes, **caractérisé en ce que** la zone de raccordement (31) est conçue de telle sorte que, lorsque l'on raccorde le récipient (10), une surface circonférentielle (26) du couvercle (20) entre en interaction avec une surface intérieure (32) de la zone de raccordement (31).

5. Dispositif (100) selon la revendication 4, **caractérisé en ce que** le dispositif d'entraînement (30) comprend un interrupteur à poussoir (S1) qui est intégré au dispositif d'entraînement (30) de telle sorte que, lorsque l'on appuie sur le récipient (10), une pression (F1) s'exerce sur le dispositif d'entraînement (30), laquelle déclenche l'interrupteur (S1) pour ainsi activer une alimentation électrique de l'entraînement (M).

6. Dispositif (100) selon la revendication 4, **caractérisé en ce que** le dispositif d'entraînement (30) comprend un interrupteur de régulation (S3) qui est intégré au dispositif d'entraînement (30) de telle sorte que :
- lorsque l'on appuie sur le récipient (10), une pression (F1) s'exerce sur le dispositif d'entraînement (30), laquelle déclenche l'interrupteur de régulation (S3) pour ainsi activer l'alimentation électrique de l'entraînement (M),
- lorsque l'on appuie plus fortement, la pression (F1) exercée sur le dispositif d'entraînement (30) est plus forte, et l'interrupteur de régulation (S3) alimente le moteur (M) en courant de façon à augmenter la vitesse du moteur.

7. Dispositif (100) selon l'une des revendications précédentes, **caractérisé en ce que** :
- le récipient (10) est fabriqué à partir de matériaux compatibles agroalimentaires,
- le dispositif (100) comprend un couvercle pour boire (11) qui peut être raccordé au récipient (10), une fois le couvercle (20) retiré.

8. Dispositif (100) selon la revendication 7, **caractérisé en ce que** le récipient (10) est conçu spécialement pour recevoir des boissons, des soupes ou autres aliments liquides à visqueux.

9. Procédé pour préparer un mélange en utilisant un dispositif (100) comprenant :
- un récipient (10) avec une ouverture (13),
- un couvercle (20) pour fermer l'ouverture (13),
- un agitateur (40) intégré fixement au couvercle (20) de sorte que, une fois l'ouverture (13) fermée avec le couvercle (20), l'agitateur (40) fait saillie à l'intérieur du récipient (10),
- un dispositif d'entraînement (30) pour entraîner l'agitateur (40),
le procédé comprenant les étapes consistant à :
a. remplir le récipient (10) d'un produit mélangé (F) par l'ouverture (13),
b. fermer l'ouverture (13) avec le couvercle (20),
c. retourner le récipient (10) avec le couvercle (20),
d. raccorder le récipient (10) avec le couvercle (20) à une zone de raccordement (31) du dispositif d'entraînement (30),
e. déclencher une interaction entre un premier élément intégré au couvercle (20) et un deuxième élément (S2) agencé dans la zone de raccordement (31) du dispositif d'entraînement (30), en vue de libérer une alimentation électrique du dispositif d'entraînement (30),
f. déclencher le dispositif d'entraînement (30) pour réaliser un mouvement de rotation (P2) d'un axe d'entraînement (35),
g. mélanger le produit (F) en faisant tourner l'agitateur (40),
h. retirer le récipient (10) avec le couvercle (20) du dispositif d'entraînement (30),
i. ouvrir le couvercle (20) pour pouvoir accéder au produit (F) à l'intérieur du récipient (10),
**caractérisé en ce que** l'interaction est une interaction magnétique et **en ce que** l'on utilise comme premier élément un élément métallique et comme deuxième élément un interrupteur magnétique (S2) ou un capteur magnétique, l'élément métallique étant monté de façon élastique à l'intérieur du couvercle (20), de sorte qu'un bord supérieur du récipient (10), lorsque l'on visse le couvercle (20) sur le récipient (10), déplace l'élément métallique en direction de la surface du couvercle (24), et **en ce que** le mouvement de rotation (P2) de l'axe d'entraînement (35) est transmis par force sur un axe (42) de l'agitateur (40).

10. Procédé selon la revendication 9, **caractérisé en ce que** le produit mélangé (F) comprend plusieurs éléments et/ou composants.

11. Procédé selon la revendication 9 ou 10, **caractérisé en ce que** le déclenchement du dispositif d'entraînement (30) s'effectue en exerçant une pression manuelle (F1) sur le récipient (10), cette pression (F1) agissant sur le dispositif d'entraînement (30) et déclenchant un interrupteur à poussoir (S1) ou un interrupteur de régulation (S3).

12. Procédé selon la revendication 9 ou 10, **caractérisé en ce que**, après l'ouverture du couvercle (20), il est fixé sur le récipient (10) un autre couvercle (11), de préférence un couvercle pour boire.

13. Procédé selon les revendications 9 à 12, **caractérisé en ce qu'**on l'utilise pour préparer des denrées alimentaires.
